# EUROPEAN PATENT APPLICATION

(11) **EP 4 722 321 A1**
(43) Date of publication of application: **08.04.2026**
(21) Application number: 24815516.0
(22) Date of filing: 29.05.2024
(51) Int. Cl.: C10M 169/04, C10M 101/02, C10M 115/08, C10M 135/10, C10M 135/36, C10M 137/10, C10M 159/24, F16C 33/66, C10N 10/04, C10N 10/12, C10N 20/02, C10N 30/00, C10N 30/06, C10N 40/02, C10N 50/10

(54) **GREASE COMPOSITION**

(30) Priority: 29.05.2023 JP 2023087822
(71) Applicant: KYODO YUSHI CO., LTD., Fujisawa-shi, Kanagawa 251-8588 (JP)
(72) Inventor: KONNO, Tadaaki, Fujisawa-shi, Kanagawa 251-8588 (JP); SAITO, Hiroyuki, Fujisawa-shi, Kanagawa 251-8588 (JP); KADOWAKI, Saya, Fujisawa-shi, Kanagawa 251-8588 (JP)
(74) Representative: Cabinet Beau de Loménie
(86) International application number: PCT/JP2024/019692
(87) International publication number: WO 2024/248035

(57) **Abstract**

A grease composition for a bearing for wheels of an automobile, comprising (a) a base oil, (b) a thickener, and (c) additives, wherein (a) the base oil has a kinematic viscosity at 100°C of 3 to 9 mm²/s, and (c) the additives comprise (cl) a metal salt of dialkyldithiophosphoric acid, (c2) a metal salt of an organic sulfonic acid, and (c3) a nitrogen- and sulfur-containing heterocyclic compound, and wherein (c3) the nitrogen- and sulfur-containing heterocyclic compound comprises at least one member selected from the group consisting of 2(3H)-benzothiazolethione and 2,5-bis(alkyldithio)-1,3,4-thiadiazole.

## Description

### Technical Field

The present invention relates to a grease composition for a bearing for wheels of an automobile, which has low torque properties and is excellent in flaking life due to surface-initiated flaking and in anti-fretting properties at low temperatures, and the bearing for wheels of the automobile in which said grease composition is enclosed.

### Background Art

Recently, from the viewpoint of reduction in use of electricity, electrical machinery and appliances and mechanical parts used not only in the automobiles but also in various industries have been required to achieve higher efficiency, leading to various attempts such as reducing the weight of the parts and improving their structure. As one of the ways to upgrade efficiency in the automobile, reduction in torque of the bearing for wheels of the automobile has become important.

Furthermore, automobiles are often transported by train or truck, and during this transportation, fretting wear may occur on the grease-applied lubrication parts due to minute vibration induced by rail joints and rough roads. Particularly, under low-temperature environment, the grease cannot sufficiently flow into the lubrication parts because of low fluidity of a base oil in the grease, causing the fretting wear. As a countermeasure against the fretting wear, the use of a grease with excellent anti-fretting properties is being planned.

A method of reducing torque for conventional greases is to use a base oil with low kinematic viscosity (Non Patent Literature 1) and to reduce stirring resistance of a grease by softening the grease.

By lowering the kinematic viscosity of the base oil, the stirring resistance of the grease is reduced, which can reduce torque. However, this can lead to surface-initiated flaking due to insufficient oil film formation and a decrease in lubrication life due to evaporation, failing to fulfil the bearing's lifespan. Additionally, if the grease is softened, it tends to leak more easily, leading to a decrease in lubrication life and failing to fulfil the bearing's lifespan.

Furthermore, as a countermeasure against conventional surface-initiated flaking, other than using a base oil with high kinematic viscosity to form a sufficient oil film thickness, for example, Patent Literature 1 proposes that a grease composition using a diurea-based thickener represented by the general formula shown below effectively prevents direct contact on both lubricated sides and improves anti-flaking properties,

R2-NHCONH-R1-NHCONH-R3

wherein R1 means a divalent hydrocarbon group having 6 to 15 carbon atoms, R2 and R3 are phenyl groups and/or cyclohexyl groups, and cyclohexyl group/(cyclohexyl group + phenyl group) in R2 and R3 are 0.85 to 0.50 (molar ratio).

However, base oils with high kinematic viscosity cannot satisfy low torque properties, and the thickener described in Patent Literature 1 also cannot satisfy low torque properties.

In addition, countermeasures have been taken to address surface-initiated flaking using additives. For example, Patent Literature 2 proposes the use of oxides or carbonates of main group metals such as zinc oxide, sodium nitrite, sodium molybdate, sodium benzoate, sodium sebacate, and calcium carbonate. However, all the additives described above are solid additives, which increases the amount of solid components in the grease, and leads to an increase in stirring resistance, thereby making it difficult to satisfy low torque properties.

It is known that fretting is surface damage that occurs under minute amplitude, and in the atmosphere, oxidized wear particles are generated, and the abrasive action often causes severe wear (Non Patent Literature 2). As methods for preventing fretting, (1) reducing the amount of relative sliding; (2) separating both surfaces and preventing direct contact; (3) coating the contact surfaces such as phosphate coating or preventing adhesion between surfaces by supplying lubricating oil or grease; and the like are proposed (Non Patent Literature 2). As a grease composition with excellent anti-fretting properties, a grease composition comprising urea-based thickeners, base oils, phosphorothioate-based compounds, and amine-based compounds is disclosed (Patent Literature 3). However, the suppression of fretting wear under more severe conditions than conventional ones (low temperature: -30 °C, amplitude: small) is insufficient, and further improvement in fretting wear is required beyond the prior art described above.

### Citation List

### Patent Literatures

Patent Literature 1: Japanese Patent No. 4809793
Patent Literature 2: Japanese Patent No. 5738712
Patent Literature 3: Japanese Patent No. 5350597

### Non Patent Literatures

Non Patent Literature 1: Hiroaki ISHIKAWA: Technical Trends and Tribology of Hub Unit Bearing, Tribologist, volume 54, issue 9, 2009, pp. 580 to 585.
Non Patent Literature 2: Yuji YAMAMOTO et al.: Tribology, Rikogakusha, issued on February 28, 1998, pp. 201 to 203.

### Summary of Invention

### Technical Problem

The objective of the present invention is to provide a grease composition for wheels that can improve surface-initiated flaking resulting from insufficient oil film formation together with having low torque properties and further suppress fretting wear under minute vibration at low temperatures.

### Solution to Problem

Regarding the problems of the low torque properties of a bearing for wheels of an automobile, improvement of flaking life due to the surface-initiated flaking, and anti-fretting properties under minute vibration at low temperatures, which are described above, these were improved by selecting a range of kinematic viscosity of the base oil and appropriate additives.

That is to say, the present invention provides a grease composition below.
1. A grease composition for a bearing for wheels of an automobile, comprising
   (a) a base oil, (b) a thickener, and (c) additives,
   wherein (a) the base oil has a kinematic viscosity at 100°C of 3 to 9 mm²/s, and
   (c) the additives comprise (c1) a metal salt of dialkyldithiophosphoric acid, (c2) a metal salt of an organic sulfonic acid, and (c3) a nitrogen- and sulfur-containing heterocyclic compound, and
   wherein (c3) the nitrogen- and sulfur-containing heterocyclic compound comprises at least one member selected from the group consisting of 2(3H)-benzothiazolethione and 2,5-bis(alkyldithio)-1,3,4-thiadiazole.
2. The grease composition of said 1, wherein (c1) the metal salt of dialkyldithiophosphoric acid is a zinc salt or a molybdenum salt.
3. The grease composition of said 1 or 2, wherein (c2) the metal salt of the organic sulfonic acid is a calcium salt or a zinc salt.
4. The grease composition of any one of said 1 to 3, wherein (a) the base oil is a synthetic oil or a mixed oil of the synthetic oil and a mineral oil.
5. The grease composition of any one of said 1 to 4, wherein (b) the thickener is a diurea compound represented by the following formula (1):

   R2-NHCONH-R1-NHCONH-R3 (1)

   wherein R1 is a divalent aromatic hydrocarbon group having 6 to 15 carbon atoms, R2 and R3, which may be the same or different, are each independently an alkyl group having 6 to 30 carbon atoms, an aryl group having 6 or 7 carbon atoms, or a cyclohexyl group.
6. The grease composition of said 5, wherein (b) the thickener is the diurea compound represented by the formula (1), in which a ratio of a molar number of the alkyl group to the total molar number of the alkyl group and the cyclohexyl group, [{(the number of the alkyl group)/(the number of the cyclohexyl group + the number of the alkyl group)}×100], is 10 to 100 mol%.
7. The bearing for wheels of the automobile in which the grease composition of any one of said 1 to 6 is enclosed.

### Effects of Invention

The grease composition of the present invention has low torque properties and is excellent in flaking life due to surface-initiated flaking and in anti-fretting properties at low temperatures.

### Brief Description of the Drawing

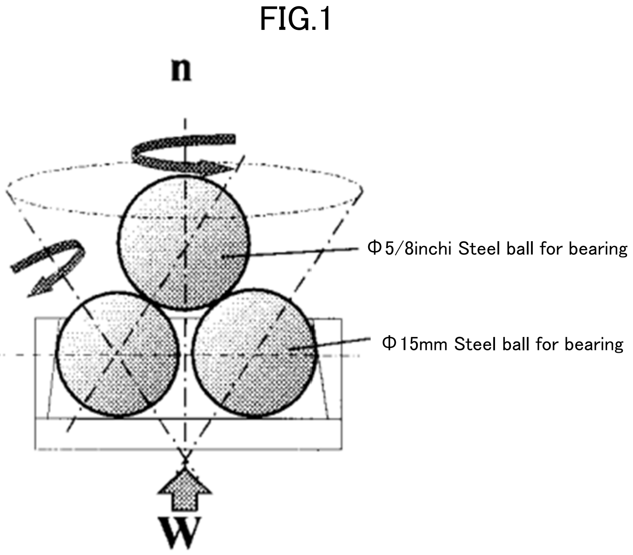

[Figure 1] schematic drawing of a test using four rolling steel balls

### Description of Embodiments

### (a) Base oil

The base oil used in the present invention has a kinematic viscosity at 100°C of 3 to 9 mm²/s, preferably 3.5 to 7.5 mm²/s, thereby enabling it to fulfill the desired low torque properties.

The base oil, which can be used in the present invention, may be either a mineral oil or a synthetic oil, but it is preferred that the base oil is the synthetic oil or a mixed oil of the synthetic oil and the mineral oil.

As the synthetic oil, a synthetic hydrocarbon oil represented by poly-α-olefin or polybuden; an ester-based synthetic oil represented by diester or polyolester; an ether-based synthetic oil represented by alkyldiphenylether or polypropylene glycol; and like can be used. From the perspective of low traction, it is preferred to comprise poly-α-olefin. The synthetic oil can also be so-called biomass oil, which is manufactured from biological resources resulting from animals and plants as raw materials. For example, a biomass ester oil, which is synthesized from alcohols and various fatty acids derived from plant oils, and a biomass hydrocarbon oil, which is derived from plant oils such as palm oil, corn oil, and soybean oil, can be used. The base oil can be used either alone or in combination with other base oil.

When the base oil of the present invention is the mixed oil of the synthetic oil and the mineral oil, the mixing proportion is not particularly limited. The mixing proportion can be selected, as necessary. When the base oil of the present invention is the mixed oil, the proportion of the mineral oil is preferably 10 to 60 mass %, based on the total mass of the base oil, from the perspective of low-temperature fluidity.

Each of synthetic oils and mineral oils can be used as a combination of different types. For example, a highly or medium viscous synthetic oil and a low viscous synthetic oil can be used in combination; a highly or medium viscous mineral oil and a low viscous synthetic oil can be used in combination; a highly or medium viscous synthetic oil and a low viscous mineral oil can be used in combination; or a low viscous synthetic oil and a low viscous mineral oil can be used in combination.

From the perspective of low traction, it is particularly preferred to use poly-α-olefin alone as the base oil of the present invention. Furthermore, particularly, it is most preferred to use poly-α-olefin having a kinematic viscosity at 100 °C of 5 to 7 mm²/s independently.

The base oil is preferably contained in an amount of 60 to 90 mass %, more preferably 70 to 88 mass %, based on the total mass of the composition. By comprising the base oil in such a proportion, a sufficient amount of a lubricating oil can be preserved, resulting in good durability.

### (b) Thickener

The thickener, which can be used in the present invention, is not particularly limited, but a diurea compound represented by the following formula (1):

R2-NHCONH-R1-NHCONH-R3 (1)

(wherein, R1 is a divalent aromatic hydrocarbon group having 6 to 15 carbon atoms, R2 and R3, which may be the same or different, are each independently an alkyl group having 6 to 30 carbon atoms, an aryl group having 6 or 7 carbon atoms, or a cyclohexyl group), is preferred.

R1 in formula (1) is preferably diphenylmethane group.

R2 and R3, which may be the same or different, are each independently an alkyl group having 6 to 30 carbon atoms, an aryl group having 6 or 7 carbon atoms, or a cyclohexyl group. R2 and R3, which may be the same or different, are preferably each independently an alkyl group having 6 to 30 carbon atoms or a cyclohexyl group.

When either R2 or R3 is a cyclohexyl group, the other is preferably an alkyl group having 6 to 30 carbon atoms, more preferably an alkyl group having 8 or 18 carbon atoms. Such a diurea compound is a mixture of so-called aliphatic diurea compound (in which both of R2 and R3 in formula (1) are alkyl groups having 6 to 30 carbon atoms), alicyclic diurea compound (in which both R2 and R3 in formula (1) are a cyclohexyl group), and alicyclic aliphatic diurea compound (in which one of R2 and R3 in formula (1) is an alkyl group having 6 to 30 carbon atoms, and the other is a cyclohexyl group), which are formed through the reaction between diisocyanate and monoamine.

A ratio of a molar number of the alkyl group to the total molar number of the alkyl group and the cyclohexyl group, [{(the number of the alkyl group)/(the number of the cyclohexyl group + the number of the alkyl group)}×100], is preferably 10 to 100 mol%, and more preferably 10 to 80 mol%.

As the thickener of the present invention, the alicyclic aliphatic diurea compound and the aliphatic diurea compound are preferred. Among them, the alicyclic aliphatic diurea compound is preferred. Particularly, it is preferred that one of R2 and R3 in formula (1) is an alkyl group having 18 carbon atoms, the other is a cyclohexyl group, and a ratio of a molar number of the alkyl group to the total molar number of the alkyl group and the cyclohexyl group is 10 to 30 mol%.

The content of the thickener in the grease composition of the present invention varies depending on the type of thickener. The penetration of the grease composition of the present invention is preferably 200 to 350, and more preferably 235 to 325. The content of the thickener is necessary to achieve such penetration. The thickener of the grease composition of the present invention is typically contained in an amount of 5 to 25 mass %, and preferably 8 to 20 mass %.

### (c) Additives

### (c1) A metal salt of dialkyldithiophosphoric acid

A metal salt of dialkyldithiophosphoric acid used in the present invention includes a compound represented by the following formula (2):

[(R4O)(R5O)P(=S)-S]₂-M1ₓOₘSₙ ... formula (2)

wherein R4 and R5 are an alkyl group having 1 to 24 carbon atoms or an aryl group having 6 to 30 carbon atoms, the alkyl group may be linear or branched, and any one of a primary, secondary, and tertiary alkyl group. M1 represents a metal element such as Zn, Mo, Cu, Fe, Ni, or Te, and x is 1 or 2, and n and m are integers from 0 to 4.

A metal salt of dialkyldithiophosphoric acid used in the present invention is a zinc salt or a molybdenum salt, preferably a zinc salt.

A metal salt of dialkyldithiophosphoric acid is typically contained in an amount of 0.1 to 5.0 mass %, preferably 0.5 to 3.0 mass %, based on the total mass of the grease composition.

### (c2) A metal salt of an organic sulfonic acid

A metal salt of an organic sulfonic acid used in the present invention is preferably a compound represented by the following formula (3):

[R6-SO₃]M2 ... formula (3)

wherein R6 represents an alkyl group, alkenyl group, alkylnaphthyl group, dialkylnaphthyl group, alkylphenyl group, or residual group of high-boiling petroleum distillate. The alkyl or the alkenyl is linear or branched and has 2 to 22 carbon atoms. M2 represents an alkali earth metal or zinc, and preferably calcium or zinc.

The metal salt of an organic sulfonic acid used in the present invention is such as calcium salt or zinc salt of alkylbenzenesulfonic acid, calcium salt or zinc salt of dinonylnaphthalenesulfonic acid, or highly basic salt thereof. Among them, calcium salt of dinonylnaphthalenesulfonic acid and calcium salt of alkylbenzenesulfonic acid are preferred.

The metal salt of an organic sulfonic acid of the present invention is preferably calcium sulfonate or zinc sulfonate from the perspective of anti-wear and rust-proofing properties as these form a strong film in combination with zinc dialkyldithiophosphate. In particular, it is preferably calcium salt or zinc salt of dinonylnaphthalenesulfonic acid having a base number of 5 or less, and more preferably calcium salt of dinonylnaphthalenesulfonic acid.

The metal salt of an organic sulfonic acid of the present invention is also preferably a highly basic calcium sulfonate having a base number of 50 or more from the perspective of improvement of heat resistance. In particular, it is preferably calcium salt of alkylbenzenesulfonic acid having a base number of 300 or more. Herein, the base numbers are values determined according to JIS K 2501.

The metal salt of an organic salt is typically contained in an amount of 0.1 to 5.0 mass %, preferably 0.5 to 4.0 mass %, based on the total mass of the grease composition.

### (c3) A nitrogen- and sulfur-containing heterocyclic compound

A nitrogen- and sulfur-containing heterocyclic compound has one or two nitrogen atoms and one sulfur atom, and includes a five-membered ring structure with one or two double bonds in the skeleton. For example, thiazoles and thiadiazoles are included.

The thiazoles specifically include 4,5-dimethylthiazole, 2-isopropyl-4-methylthiazole, 1,2-benzoisothiazole, 2-methyl-β-naphthothiazole, 2-methoxythiazole, thiazole-2-carbaldehyde, 2-acetylthiazole, benzothiazole-2-acetonitrile, 4-thiazolamine, 2-amino-4-methylthiazole, benzothiazol-6-amine, 2-aminobenzothiazole, 2-amino-6-methylbenzothiazole, 4-(2-methyl-4-thiazolyl)aniline, 2-amino-5-phenylthiazole, 2-amino-6-methoxybenzothiazole, 5-methoxybenzothiazol-2-amine, 2-aminobenzothiazol-6-ol, ethyl 2-amino-α-(methoxyimino)-4-thiazoleacetate, 3-isothiazolecarboxylic acid, 4-thiazolecarboxylic acid, 3-methyl-4-isothiazolecarboxylic acid, 4-methyl-5-thiazolecarboxylic acid, 2-methylthiazole-5-carboxylic acid, benzothiazole-2-carboxylic acid, 2-benzothiazoleacetic acid, 4-methyl-5-thiazoleethanol, 2(3H)-benzothiazolethione, 4-methyl-2-mercaptobenzothiazole, bis(benzothiazol-2-yl)persulfide, 2-(methylthio)benzothiazole, and 2-methylbenzothiazole.

The thiazole compound used in the present invention is 2(3H)-benzothiazolethione.

Furthermore, the thiadiazoles are specifically 2,5-dimercapto-1,3,4-thiadiazole or derivatives thereof, including, for example, 1,3,4-thiadiazole-2,5-dithioacetic acid, 2-amino-1,3,4-thiadiazole, [(5-mercapto-1,3,4-thiadiazol-2-yl)thio]acetic acid, 5-amino-1,3,4-thiadiazole-2-thiol, 2,2'-dithiobis(1,3,4-thiadiazole-5-thiol), 2,5bis(n-dodecyldithio)thiadiazole, 2,5-bis(tert-decyldithio)-1,3,4-thiadiazole, 2,5bis(n-octyldithio)thiadiazole, 2,5-bis(tert-octyldithio)-1,3,4-thiadiazole, 2,5-bis(tert-nonyldithio)-1,3,4-thiadiazole, and 2,5bis(diethyldithiocarbamic acid)thiadiazole.

The thiadiazole compound used in the present invention is 2,5-bis(alkyldithio)-1,3,4-thiadiazole, in which the alkyl group has 6 to 18 carbon atoms and is linear or branched, and may be any one of a primary, secondary, and tertiary alkyl group. For example, 2,5bis(n-dodecyldithio)thiadiazole, 2,5-bis(tert-decyldithio)-1,3,4-thiadiazole, 2,5bis(n-octyldithio)thiadiazole, 2,5-bis(tert-octyldithio)-1,3,4-thiadiazole, 2,5-bis-(tert-nonyldithio)-1,3,4-thiadiazole and like are included.

Among them, 2,5-bis-(tert-nonyldithio)-1,3,4-thiadiazole is preferred.

Component (c3) of the present invention includes at least one member selected from the group consisting of 2(3H)-benzothiazolethione and 2,5-bis(alkyldithio)-1,3,4-thiadiazole, and preferably includes 2(3H)-benzothiazolethione. The compositions of the present invention may include other nitrogen- and sulfur-containing heterocyclic compounds; however, it is preferred that the other nitrogen- and sulfur-containing heterocyclic compounds are not included.

The nitrogen- and sulfur-containing heterocyclic compound is typically contained in an amount of 0.1 to 3.0 mass %, preferably 0.1 to 2.0 mass %, based on the total mass of the grease composition. If the nitrogen- and sulfur-containing heterocyclic compounds include other nitrogen- and sulfur-containing heterocyclic compounds, the above content means the content of 2(3H)-benzothiazolethione and/or 2,5-bis(alkyldithio)-1,3,4-thiadiazole, and the proportion of the other nitrogen- and sulfur-containing heterocyclic compounds to 2(3H)-benzothiazolethione and/or 2,5-bis(alkyldithio)-1,3,4-thiadiazol is preferably 0.1 to 1.8, and more preferably 0.1 to 1.0.

The component (c) of the present invention preferably includes, as (c1), zinc dialkyldithiophosphate or molybdenum dialkyldithiophosphate, as (c2), neutral calcium sulfonate, highly basic calcium sulfonate, or zinc sulfonate, and as (c3), 2(3H)-benzothiazolethione.

The component (c) of the present invention more preferably includes, as (c1), zinc dialkyldithiophosphate, as (c2), neutral calcium sulfonate (for example, base number 0.1 to 3.0) or highly basic calcium sulfonate (for example, base number 300 to 500), and as (c3), 2(3H)-benzothiazolethione.

### Other Additives

Any additives that are typically used for greases can be used for the grease composition of the present invention, as necessary. For example, rust inhibitors other than metal salts of organic sulfonic acids, antioxidants, metal corrosion inhibitors, oiliness agents, and anti-wear agents other than metal salts of dialkyldithiophosphoric acid are included.

### ▪ Rust inhibitors

Carboxylic acids and derivatives thereof: alkenyl succinic anhydride, alkenyl succinate ester, alkenyl succinate half ester.

Salts of carboxylic acid: Metal salts (Ca, Ba, Mg, Al, Zn, Na and the like) or amine salts of fatty acids, dibasic acids, naphthenic acids, lanolin fatty acids, alkenyl succinic acids and the like.

### ▪ Antioxidants

Amine antioxidants: phenyl-α-naphthylamine, alkylated phenyl-α- naphthylamine, alkylated diphenylamine and the like.

Phenol antioxidants: hindered phenol and the like such as 2,6-di-tert-butyl-p-cresol, pentaerythrityl-tetrakis[3-(3,5-di-tert-butyl-4-hydroxyphenyl)propionate], octadecyl-3-(3,5-di-tert-butyl-4-hydroxyphenyl)propionate.
▪ Metal corrosion inhibitors: benzotriazole or derivatives thereof, and zinc oxide and the like.
▪ Oiliness agents: sorbitan trioleate, sorbitan monooleate and the like.
▪ Anti-wear agents

Phosphorus-based compounds: amine phosphate, tricresyl phosphate and the like. Sulfur-based compounds: dibenzyl disulfide, various kinds of polysulfide and the like. Sulfur-phosphorus-based compounds: triphenyl phosphorothioate and the like.

Among them, rust inhibitors (particularly, a mixture of amine salt of fatty acid and zinc naphthenate), antioxidants (particularly, amine antioxidants, more particularly, alkylated diphenylamine), and/or anti-wear agents (particularly, amine phosphate) are preferably included.

These other additives are typically contained in an amount of 1.0 to 12 mass %, and preferably 1.0 to 6.0 mass %, based on the total mass of the composition.

The grease composition of the present invention is used for a bearing for wheels of an automobile. Specifically, it is used for the bearing of wheels for a standard motor vehicle, a mid-sized motor vehicle, and a large motor vehicle.

### Examples

### <Preparations of test greases>

Grease compositions of Examples and Comparative Examples were prepared using a thickener and a base oil described below. Specifically, diphenylmethanediisocyanate (1 mol) was reacted with a given amine (2 mol) in the base oil, and the resulting mixture was heated followed by cooled, then kneaded by a triple roll mill to achieve a worked penetration of 300 (test method, JIS K2220 7.), giving grease compositions of Examples 1 to 11 and Comparative Examples 1 to 7. A kinematic viscosity at 100 °C of the base oil was determined according to JIS K2220 23., and a base number was determined according to JIS K 2501.

Unless otherwise described, the unit of numbers in Table 1 and Table 2 represents mass % based on the total mass of the grease composition.
(a) Base oil
   - Poly-α-olefin A: the kinematic viscosity at 100 °C = 39.2 to 40.7 mm²/s
   - Poly-α-olefin B: the kinematic viscosity at 100 °C = 5.7 to 6.3 mm²/s
   - Poly-α-olefin C: the kinematic viscosity at 100 °C = 3.8 to 4.0 mm²/s
   - Mineral oil A the kinematic viscosity at 100 °C : 6.0 to 6.2 mm²/s
   - Ester oil A: the kinematic viscosity at 100 °C = 5.4 to 5.8 mm²/s
   - Ether oil A: the kinematic viscosity at 100 °C = 9.1 to 9.3 mm²/s
   - Ether oil B: the kinematic viscosity at 100 °C = 3.3 to 3.5 mm²/s
(b) Thickener
   - Thickener A: alicyclic aliphatic diurea (a molar ratio of cyclohexylamine and stearylamine is cyclohexylamine : stearylamine = 7 : 1)
   - Thickener B: alicyclic aliphatic diurea (a molar ratio of cyclohexylamine and stearylamine is cyclohexylamine : stearylamine = 3 : 7)
   - Thickener C: aliphatic diurea (octylamine)
   - Thickener D: aliphatic diurea (stearylamine)
(c) Additives
   - Additive A: (c2) calcium salt of dinonylnaphthalenesulfonic acid (base number : 0.26)
   - Additive B: (c2) highly basic calcium salt of alkylbenzenesulfonic acid (base number : 405)
   - Additive C: (c2) zinc salt of dinonylnaphthalenesulfonic acid (base number : 0.50)
   - Additive D: (c1) zinc dialkyldithiophosphate (c)
   - Additive F: (c1) molybdenum dialkyldithiophosphate
   - Additive F: (c3) 2(3H)-benzothiazolethione
   - Additive G: (c3) 2,5-bis(tert-nonyldithio)-1,3,4-thiadiazole
   - Rust inhibitor: a mixture of fatty acid amine salt and zinc naphthenate
   - Amine-based antioxidant: alkylated diphenylamine
   - Anti-wear agent: tertiary alkylamine-dimethyl phosphate

### <Test methods and judgements>

### (1) Anti-flaking properties against surface-initiated flaking: a test using four rolling steel balls

### The outline of the test

Three steel balls for a bearing with a diameter of Φ15 mm were prepared and then disposed in a cylindrical container with an inner diameter of 40 mm and a height of 14 mm, which was filled with approximately 20 g of the test grease. As shown in Figure 1, a rotary steel ball for the bearing (Φ5/8 inch) was placed on the top of these three steel balls, and then they were set to a test machine. The test was initiated by applying a load in the direction of W as shown in Figure 1. The lower three balls revolved while rotating on their own axes. They were continuously rotated until the flaking occurred. 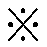 The flaking occurs at a point between two balls having the highest contact pressure. 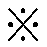 The life is defined as the total number of contact times of the upper ball at the time that the flaking occurs. This is repeated 3 to 5 times, then L50 life (the number of contact times when 50% expired) is determined. The results are shown in Table 1 and Table 2.

### Test conditions

Test steel balls: grade 40 (15 mm) and grade 200 (5/8 inch) steel balls for the bearing
Load for the test (W): 250 kgf (5.6 GPa)
Rotational speed (n): 1500 rpm
Repeated number of the test: 3 to 5 times

### Evaluation criteria

The total number of contacts
300×10⁵ rotations or more ... ∘ (acceptable)
Less than 300×10⁵ rotations... × (unacceptable)

### (2) Anti-fretting properties at low temperature: Fafnir test

Fafnir test was conducted according to ASTM D 4170.

The test grease was applied to two pairs of test thrust bearings as described below, and a prescribed oscillation motion was performed to determine abrasion loss (weight loss of the fretting wear). The results are shown in Tables 1 and 2.
Bearing: 51204 thrust bearing
Load: 4000 N (contact pressure: 1.9 GPa)
Angle of oscillation: ±3°
Oscillation cycle: 12 Hz
Time: 2 h
Temperature: -30°C
Filling amount of the grease: 1.0 g per bearing pair
Abrasion loss: weight loss of race per bearing pair (total weight loss of test bearing race/2)
Evaluation criteria
Abrasion loss
Less than 2.0 mg ... ∘ (acceptable)
2.0 mg or more ... × (unacceptable)

### (3) Low torque properties: rheometer test (shear stress)

The test was conducted using a viscoelastic measuring device, Physical MCT 301 manufactured by Anton Paar Japan K.K. The test grease was applied to the gap between the predetermined plates. The distance between the plates was set to a predetermined value, and then any excess grease that was squeezed out was removed. The shear rate was logarithmically increased from 0.1 S⁻¹ to 2500 S⁻¹. The shear stress at 2500 S⁻¹ was calculated and used as the measurement result. The results are shown in Table 1 and Table 2.
Shear rate: 0.1 to 2500 S⁻¹
Test temperature: 25°C
Plate: cone type
Cone angle: 2°
Distance between plates: 0.05 mm
Plate diameter: 25 mm
Evaluation criteria
Shear stress
2000 Pa or less ... ∘ (acceptable)
More than 2000 Pa ... × (unacceptable)
Overall evaluations
Each of the tests was acceptable ...... ∘ (acceptable)
At least one of the tests was unacceptable ... × (unacceptable)

**Table 1**

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Base oil | Poly- *α* -olefin A | | | | | | | 18.9 | | | | | | |
| | Poly- *α* -olefin B | 82.3 | 82.3 | 82.3 | 82.3 | 82.3 | | 63.4 | 41.1 | | | 82.3 | 82.3 | 82.3 |
| | Poly- *α* -olefin C | | | | | | 82.3 | | | | | | | |
| | Mineral oil A | | | | | | | | 41.2 | | | | | |
| | Ester oil A | | | | | | | | | 82.3 | | | | |
| | Ether oil A | | | | | | | | | | 41.1 | | | |
| | Ether oil B | | | | | | | | | | 41.2 | | | |
| | Kinematic viscosity at 100°C [mm²/s] | 5.80 | 5.80 | 5.80 | 5.80 | 5.80 | 3.86 | 8.84 | 5.94 | 5.50 | 5.48 | 5.80 | 5.80 | 5.80 |
| Thickener | Type of thickener | A | A | A | A | A | A | A | A | A | A | B | C | D |
| | The amount of thickener | 11.5 | 11.5 | 11.5 | 11.5 | 11.5 | 11.5 | 11.5 | 11.5 | 11.5 | 11.5 | 9.0 | 12.0 | 16.0 |
| Additives | (c2) Additive A (Ca sulfonate) | 2 | | | 2 | 2 | 2 | 2 | 2 | 2 | 2 | 2 | 2 | 2 |
| | (c2) Additive B (overbased Ca sulfonate) | | 2 | | | | | | | | | | | |
| | (c2) Additive C (zinc sulfonate) | | | 2 | | | | | | | | | | |
| | (c1) Additive D (zinc dialkyldithiophosphate) | 1 | 1 | 1 | | 1 | 1 | 1 | 1 | 1 | 1 | 1 | 1 | 1 |
| | (c1) Additive E (molybdenum dialkyldithiophosphate) | | | | 1 | | | | | | | | | |
| | (c3) Additive F (2(3H)-benzothiazolethione) | 0.2 | 0.2 | 0.2 | 0.2 | | 0.2 | 0.2 | 0.2 | 0.2 | 0.2 | 0.2 | 0.2 | 0.2 |
| | (c3) Additive G (2,5-bis(tert-nonyldithio)-1,3,4-thiadiazole) | | | | | 0.2 | | | | | | | | |
| | rust inhibitor | 1 | 1 | 1 | 1 | 1 | 1 | 1 | 1 | 1 | 1 | 1 | 1 | 1 |
| | amine-based antioxidant | 1 | 1 | 1 | 1 | 1 | 1 | 1 | 1 | 1 | 1 | 1 | 1 | 1 |
| | anti-wear agent | 1 | 1 | 1 | 1 | 1 | 1 | 1 | 1 | 1 | 1 | 1 | 1 | 1 |
| Anti-flaking properties | Test using four rolling steel balls 5.6GPa, 1500rpm | ○ | ○ | ○ | ○ | ○ | ○ | ○ | ○ | ○ | ○ | ○ | ○ | ○ |
| | L50 life ○ : 300≦, × : <300 | 380 | 305 | 410 | 335 | 366 | 302 | 455 | 342 | 367 | 355 | 344 | 308 | 341 |
| Anti-fretting properties | Fafnir test, 4000N(1.9GPa), ±3° , 12Hz, 2 h , -30°C, ○: <2mg, × : 2mg≦ | ○ | ○ | ○ | ○ | ○ | ○ | ○ | ○ | ○ | ○ | ○ | ○ | ○ |
| | | 0.80 | 0.80 | 0.45 | 1.35 | 0.90 | 0.65 | 0.80 | 1.23 | 0.55 | 0.90 | 0.95 | 0.75 | 0.70 |
| Low torque properties | rheometer, angle 2° , gap 0.05mm, shear stress at 2500s⁻¹ | ○ | ○ | ○ | ○ | ○ | ○ | ○ | ○ | ○ | ○ | ○ | ○ | ○ |
| | O : ≦2000Pa, × >2000Pa | 1100 | 1100 | 1100 | 1100 | 1100 | 995 | 1830 | 1120 | 1040 | 1030 | 1020 | 1250 | 1210 |
| Overall evaluation | | ○ | ○ | ○ | ○ | ○ | ○ | ○ | ○ | ○ | ○ | ○ | ○ | ○ |

**Table 2**

| | | Comparative Example 1 | Comparative Example 2 | Comparative Example 3 | Comparative Example 4 | Comparative Example 5 |
|---|---|---|---|---|---|---|
| Base oil | Poly- *α* -olefin A | 41.1 | | | | |
| | Poly- *α* -olefin B | 41.2 | 82.3 | 82.3 | 82.3 | 82.3 |
| | Poly- *α* -olefin C | | | | | |
| | Mineral oil A | | | | | |
| | Ester oil A | | | | | |
| | Ether oil A | | | | | |
| | Ether oil B | | | | | |
| | Kinematic viscosity at 100°C [mm²/s] | 14.8 | 5.80 | 5.80 | 5.80 | 5.80 |
| Thickener | Type of thickener | A | A | A | A | A |
| | The amount of thickener | 11.5 | 11.5 | 11.5 | 11.5 | 11.5 |
| Additives | (c2) Additive A (Ca sulfonate) | 2 | 2 | | | 2 |
| | (c2) Additive B (overbased Ca sulfonate) | | | | | |
| | (c2) Additive C (zinc sulfonate) | | | 2 | | |
| | (c1) Additive D (zinc dialkyldithiophosphate) | 1 | 1 | 1 | 1 | |
| | (c1) Additive E (molybdenum dialkyldithiophosphate) | | | | | |
| | (c3) Additive F (2(3H)-benzothiazolethione) | 0.2 | | | 0.2 | 0.2 |
| | (c3) Additive G (2,5-bis(tert-nonyldithio)-1,3,4-thiadiazole) | | | | | |
| | rust inhibitor | 1 | 1 | 1 | 1 | 1 |
| | amine-based antioxidant | 1 | 1 | 1 | 1 | 1 |
| | anti-wear agent | 1 | 1 | 1 | 1 | 1 |
| Anti-flaking properties | Test using four rolling steel balls 5.6GPa, 1500rpm | ○ | × | × | × | × |
| | L50 life ○ : 300≦, × : <300 | 700< terminated | 67 | 46 | 81 | 106 |
| Anti-fretting properties | Fafnir test, 4000N(1.9GPa), ±3° , 12Hz, 2 h , -30°C, ○ : <2mg, × : 2mg≦ | ○ | ○ | ○ | ○ | × |
| | | 1.55 | 0.90 | 0.8 | 0.95 | 2.30 |
| Low torque properties | rheometer, angle 2° , gap 0.05mm, shear stress at 2500s⁻¹ | × | ○ | ○ | ○ | ○ |
| | O : ≦2000Pa, × >2000Pa | 2450 | 1100 | 1100 | 1100 | 1100 |
| Overall evaluation | | × | × | × | × | × |

The base oil has a kinematic viscosity at 100°C of 3 to 9 mm²/s, and grease compositions of Examples 1 to 13, which comprise a thickener and a given additive, were acceptable in the test using four rolling steel balls, the Fafnir test, and the rheometer test.

On the other hand, grease composition of Comparative Example 1, which has a high kinematic viscosity at 100°C of 14.8 mm²/s, and grease compositions of Comparative Examples 2 to 5, which comprise no additives, were unacceptable in at least one of the test using four rolling steel balls, the Fafnir test, or the rheometer test.

## Claims

1. A grease composition for a bearing for wheels of an automobile, comprising (a) a base oil, (b) a thickener, and (c) additives,
wherein (a) the base oil has a kinematic viscosity at 100°C of 3 to 9 mm²/s, and
(c) the additives comprise (c1) a metal salt of dialkyldithiophosphoric acid, (c2) a metal salt of an organic sulfonic acid, and (c3) a nitrogen- and sulfur-containing heterocyclic compound, and
wherein (c3) the nitrogen- and sulfur-containing heterocyclic compound comprises at least one member selected from the group consisting of 2(3H)-benzothiazolethione and 2,5-bis(alkyldithio)-1,3,4-thiadiazole.

2. The grease composition of claim 1, wherein (c1) the metal salt of dialkyldithiophosphoric acid is a zinc salt or a molybdenum salt.

3. The grease composition of claim 1, wherein (c2) the metal salt of the organic sulfonic acid is a calcium salt or a zinc salt.

4. The grease composition of claim 1, wherein (a) the base oil is a synthetic oil or a mixed oil of the synthetic oil and a mineral oil.

5. The grease composition of claim 1, wherein (b) the thickener is a diurea compound represented by the following formula (1):
R2-NHCONH-R1-NHCONH-R3 (1)
wherein R1 is a divalent aromatic hydrocarbon group having 6 to 15 carbon atoms, R2 and R3, which may be the same or different, are each independently an alkyl group having 6 to 30 carbon atoms, an aryl group having 6 or 7 carbon atoms, or a cyclohexyl group.

6. The grease composition of claim 5, wherein (b) the thickener is the diurea compound represented by the formula (1), in which a ratio of a molar number of the alkyl group to the total molar number of the alkyl group and the cyclohexyl group, [{(the number of the alkyl group)/(the number of the cyclohexyl group + the number of the alkyl group)}×100], is 10 to 100 mol%.

7. The bearing for wheels of the automobile in which the grease composition of any one of claims 1 to 6 is enclosed.
